# EUROPÄISCHE PATENTANMELDUNG

(11) **EP 1 201 893 A2**
(43) Veröffentlichungstag der Anmeldung: **02.05.2002**
(21) Anmeldenummer: 01125682.3
(22) Anmeldetag: 26.10.2001
(51) Int. Cl.: F02B 43/10, F02M 21/02

(54) **Differenzdrucksicherheitsventil**

(30) Priorität: 28.10.2000 DE 10053609
(71) Anmelder: H2-Interpower GmbH, 91126 Schwabach (DE)
(72) Erfinder: Ruthrof, Klaus, 91126 Schwabach (DE)
(74) Vertreter: Patentanwälte Rehberg + Hüppe

(57) **Zusammenfassung**

Ein Differenzdrucksicherheitsventil (7; 27) dient zur Begrenzung des Differenzdrucks zwischen zwei Medien (3, 23) und weist eine erste Druckkammer (9; 29) für das eine der Medien (3, 23) und eine zweite Druckkammer (19; 39) für das andere der Medien (3, 23), eine Ablaßöffnung (12; 32) für das Ablassen des einen der Medien (3, 23) aus der ersten Druckkammer (9; 29), einen Ventilkörper (20; 40), der in einer Normalstellung die Ablaßöffnung (12; 32) verschließt und in einer Ablaßstellung die Ablaßöffnung (12; 32) freigibt, und eine die beiden Druckkammern (9, 19;29, 39) gegeneinander abdichtende verformbare Membran (11; 31) auf, deren von Differenzdruckänderungen zwischen den beiden Druckkammern (9, 19; 29, 39) hervorgerufene Verformungen den Ventilkörper (20; 40) aus seiner Normalstellung in seine Ablaßstellung bringen und umgekehrt.

## Beschreibung

Die Erfindung betrifft ein Differenzdrucksicherheitsventil zur Begrenzung des Differenzdrucks zwischen zwei Medien, mit einer ersten Druckkammer für das eine der Medien und einer zweiten Druckkammer für das andere der Medien, mit einer Ablaßöffnung für das Ablassen des einen der Medien aus der ersten Druckkammer mit einem Ventilkörper, der in einer Normalstellung die Ablaßöffnung verschließt und in einer Ablaßstellung die Ablaßöffnung freigibt.

Konkret befaßt sich die Erfindung mit der Problematik der Begrenzung des Differenzdrucks zwischen zwei Medien, die nicht miteinander vermischt werden dürfen, weil sich hierauf beispielsweise eine explosive Mischung ergeben würde. Diese Problemstellung ist unter anderem bei einem Membranhydrolyseur gegeben, bei dem auf der einen Seite der Membran Wasserstoff und auf der anderen Seite der Membran Sauerstoff anfällt. Der Differenzdruck dieser beiden Medien wirkt auf die Membran ein, die die beiden Medien voneinander trennt. Wenn der Differenzdruck zu groß wird, besteht die Gefahr einer Beschädigung der Membran, in deren Folge es zur Bildung von Knallgas durch Vermischung des Sauerstoffs mit dem Wasserstoff kommen kann. Es ist zwar bekannt, durch Überdrucksicherheitsventile den absoluten Druck des Sauerstoffs und des Wasserstoffs auf den beiden Seiten der Membran unterhalb eines vorgegebenen Grenzwerts zu halten, doch können auch unterhalb dieser Absolutdrücke Differenzdrücke auftreten, die für die Membran gefährlich sind. Hervorgerufen werden können solche gefährlichen Differenzdrücke durch eine unsachgemäße Betriebsweise des Hydrolyseurs, versehentliches Öffnen von Ablaßventilen für den Sauerstoff oder den Wasserstoff, unsachgemäße Zufuhr von Wasser in den Hydrolyseur oder dgl..

Differenzdruckgesteuerte Ventile sind zwar beispielsweise aus dem Bereich pneumatischer Kraftfahrzeugbremsen grundsätzlich bekannt. Solche Differenzdruckventile sind aber auch dann, wenn sie die Merkmale der eingangs beschriebenen Art aufweisen, nicht für die Verwendung als Differenzdrucksicherheitsventile zur Begrenzung des Differenzdrucks zwischen zwei Medien geeignet, aus denen gefährliche Mischungen entstehen können.

So ist es die Aufgabe der vorliegenden Erfindung, ein Differenzdrucksicherheitsventil der eingangs beschriebenen Art aufzuzeigen, das zur Begrenzung des Differenzdrucks zwischen zwei Medien geeignet ist, die aus Sicherheitsgründen nicht miteinander vermischt werden dürfen.

Erfindungsgemäß wird diese Aufgabe bei einem Differenzdrucksicherheitsventil der eingangs beschriebenen Art dadurch gelöst, daß die beiden Druckkammern durch eine verformbare Membran gegeneinander abgedichtet sind, deren von Differenzdruckänderungen zwischen den beiden Druckkammern hervorgerufene Verformungen den Ventilkörper aus seiner Normalstellung in seine Ablaßstellung bringen und umgekehrt.

Bei dem neuen Differenzdrucksicherheitsventil sind die beiden Druckkammern absolut gegeneinander abgedichtet. Die Membran ist zwar in sich beweglich, im Bereich ihrer Abdichtung gegenüber den beiden Druckkammern findet aber keine Bewegung statt. So wird zuverlässig eine Vermischung der beiden Medien im Bereich des Differenzdrucksicherheitsventils verhindert. Dennoch wird der Differenzdruck zwischen den beiden Medien bei dem neuen Differenzdrucksicherheitsventil unmittelbar und ohne die Notwendigkeit eines zusätzlichen aktiven Eingriffs oder einer zusätzlichen Regelung für die Steuerung des Ventilkörpers aus seiner Normalstellung in seine Ablaßstellung und umgekehrt genutzt. Die verformbare Membran wird beiderseits durch die Medien in den Druckkammern beaufschlagt. Entsprechend ändert sich ihre Verformung, wenn sich der Differenzdruck zwischen den Medien ändert. Die sich ändernde Verformung wird von der Membran abgegriffen und auf den Ventilkörper übertragen, so daß dieser seine Normalstellung verläßt, wenn ein bestimmter Differenzdruck zwischen den beiden Medien überschritten wird. Aufgrund der Mündung der Ablaßöffnung in die erste Druckkammer wird bei dem Differenzdrucksicherheitsventil ein Überdruck des einen der beiden Medien abgelassen. Sobald der Differenzdruck abgebaut ist, kehrt dann der Ventilkörper unter Rückformung der Membran wieder in seine Normalstellung zurück und verschließt die Ablaßöffnung.

Wenn der Ventilkörper an der Membran ausgebildet ist, wird die von dem einen Medium in der ersten Druckkammer beaufschlagte effektive Fläche der Membran größer, wenn der Ventilkörper aus seiner Normalstellung in seine Ablaßstellung gebracht wird. Im Ergebnis kehrt der Ventilkörper erst bei einem deutlich unter dem Differenzdruck, der zu einer Freigabe der Ablaßöffnung geführt hat, liegenden Differenzdruck in seine Normalstellung zurück. Hierdurch wird ein Flattern des Ventilkörpers zwischen seiner Normalstellung und seiner Ablaßstellung verhindert.

Durch eine Vorspannkraft, die den Ventilkörper in seine Normalstellung beaufschlagt, kann der Differenzdruck zwischen den beiden Medien eingestellt werden, bei dem der Ventilkörper die Ablaßöffnung freigibt. Es ist auch möglich, eine Einstellung des entsprechenden Differenzdrucks, bei dem der Ventilkörper seine Normalstellung verläßt, vorzunehmen, indem der Ventilkörper durch eine Vorspannkraft in seine Ablaßstellung beaufschlagt wird. Dann ist aber darauf zu achten, daß der Ventilkörper seine Normalstellung erreicht, bevor die erste Druckkammer mit dem einen Medium beaufschlagt wird, weil dieses sonst durch die freie Ablaßöffnung austritt.

Durch Einstellung der Vorspannkraft kann der Differenzdruck exakt festgelegt werden, bei dem der Ventilkörper seine Normalstellung verläßt, so daß das eine der beiden Medien abgelassen wird.

Wenn das neue Differenzdrucksicherheitsventil zusammen mit einem Überdrucksicherheitsventil für das eine der Medien vorgesehen ist, das dieses Medium abläßt, wenn es einen vorgegebenen Absolutdruck überschreitet, wird eine zusätzliche Sicherheitsvorkehrung getroffen. Das neue Differenzdrucksicherheitsventil reagiert seinerseits nicht auf den absoluten Druck eines der beiden Medien.

Vorzugsweise wird das neue Differenzdrucksicherheitsventil zusammen mit einem weiteren Differenzdrucksicherheitsventil desselben Aufbaus verwendet, wobei das weitere Differenzdrucksicherheitsventil die zweite Druckkammer für das eine der Medien, die erste Druckkammer für das andere der Medien und die Ablaßöffnung für das Ablassen des anderen der Medien aus der ersten Druckkammer aufweist. Während das eine Differenzdrucksicherheitsventil dann anspricht, wenn in dem einen Medium ein relativer Überdruck herrscht, spricht das andere Differenzdrucksicherheitsventil auf einen relativen Überdruck in dem anderen Medium an. Mit beiden Differenzdrucksicherheitsventilen zusammen wird der Differenzdruck zwischen den beiden Medien beidseitig begrenzt.

Die beiden Differenzdrucksicherheitsventile zur beiderseitigen Begrenzung des Differenzdrucks zwischen den beiden Medien können ohne weiteres zusammen in einem gemeinsamen Gehäuse angeordnet sein.

Die Ablaßöffnungen der beiden Differenzdrucksicherheitsventile führen aber vorzugsweise zu voneinander getrennten Ablaßleitungen um auch hier eine unerwünschte Vermischung der beiden Medien zu verhindern.

Besondere Vorteile entwickelt die Kombination von zwei neuen Differenzdrucksicherheitsventilen zur Absicherung einer zentralen Membran eines Membranhydrolyseurs vor Differenzdrücken zwischen den die zentrale Membran beiderseits beaufschlagenden Medien. In dieser Anwendung wird eine Überlastung der zentralen Membran ebenso verhindert wie ein Vermischen der beiden Medien, d. h. eine Knallgasbildung.

Zusätzliche Anwendungsmöglichkeiten des neuen Differenzdrucksicherheitsventils ergeben sich dort, wo Differenzdrücke zwischen mehr als zwei Medien innerhalb vorgegebener Grenzen gehalten werden müssen. Hierzu sind dann mindestens drei Differenzdrucksicherheitsventile gemäß der Erfindung vorzusehen, wobei die beiden Druckkammern in den einzelnen Differenzdrucksicherheitsventilen für jeweils unterschiedliche Paarungen der Medien und auch für unterschiedliche Zuordnungen zu den beiden Druckkammern vorzusehen sind.

Die Erfindung wird im folgenden anhand eines Ausführungsbeispiels näher erläutert und beschrieben, dabei zeigt
- Fig. 1: ein Prinzipschaubild zur Verwendung von zwei miteinander verschalteten Differenzdrucksicherheitsventilen im Zusammenhang mit einem Membranhydrolyseur und
- Fig. 2: Die Kennlinien der Ventilanordnung gemäß Fig. 1.

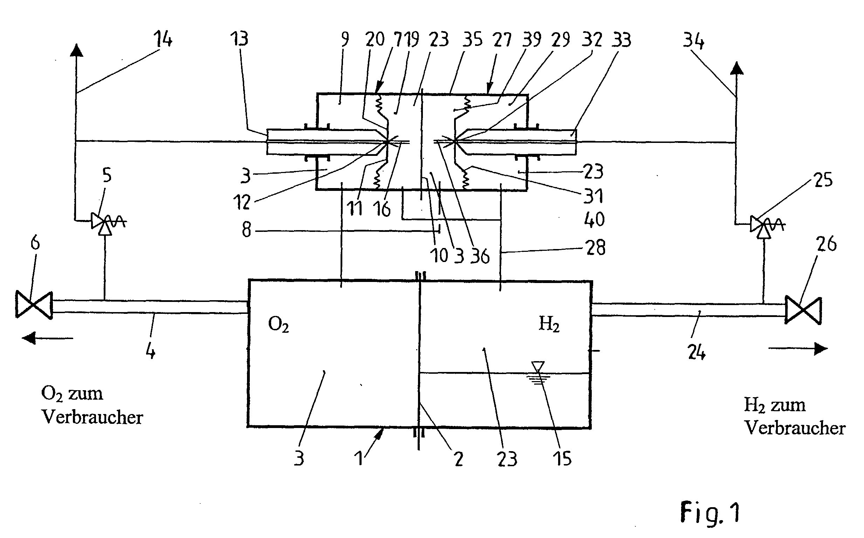

Im unteren Teil von Fig. 1 ist ein Membranhydrolyseur 1 schematisch wiedergegeben. Der Membranhydrolyseur 1 weist eine zentrale Membran 2 auf. Auf der einen Seite (in der Zeichnung ist dies die rechte Seite) der Membran 2 wird Wasser bis zu einem Wasserstand 15 angeboten. Auf der anderen Seite der Membran 2 (ihrer linken Seite in Fig. 1) liegt aus dem zersetzten Wasser gewonnener Sauerstoff 3 vor. Oberhalb des Wasserstands 15 liegt entsprechend Wasserstoff 23 vor. Ein derartiger Aufbau eines Hydrolyseurs, einschl. der hier nicht beschriebenen elektrischen Anschlüsse, ist beispielsweise aus der DE-A-199 16 240 bekannt.

Zum Abführen des Sauerstoffs 3 aus dem Membranhydrolyseur 1 ist eine Sauerstoffleitung 4 vorgesehen, an deren Ende ein Verbrauchsentnahmeventil 6 vorgesehen ist, das zu einem Verbraucher, einem Sauerstoffspeicher oder dgl. führt. Entsprechend ist für den Wasserstoff 23 eine Wasserstoffleitung 24 mit einem Verbrauchsentnahmeventil 26 an ihrem Ende vorgesehen. Weiterhin ist für den Sauerstoff 3 ein Überdrucksicherheitsventil 5 vorgesehen, welches hier in einer Stichleitung von der Sauerstoffleitung 4 angeordnet ist und welches beim Überschreiten eines vorgegebenen und einstellbaren Absolutdrucks des Sauerstoffs 3 Sauerstoff in eine Sammelleitung 14 abläßt, bis der vorgegebene Absolutdruck wieder unterschritten wird. In entsprechender Anordnung ist ein einstellbares Überdrucksicherheitsventil 25, welches zu einer Sammelleitung 34 führt, für den Wasserstoff 23 vorgesehen.

Zusätzlich zu den jeweiligen Absolutdrücken des Sauerstoffs 3 und des Wasserstoffs 23 wird bei der Anordnung gemäß Fig. 1 auch der Differenzdruck zwischen diesen beiden Medien 3, 23 mit passiven Mitteln innerhalb eines vorgegebenen Bereichs gehalten. Hierzu sind zwei Differenzdrucksicherheitsventile 7 und 27 vorgesehen. Das Differenzdrucksicherheitsventil 7 weist zwei Druckkammern 9 und 19 auf. Die beiden Druckkammern 9 und 19 werden durch eine verformbare Membran 11 gasdicht voneinander getrennt. Die Membran 11 bildet gleichzeitig einen Ventilkörper 20 aus, der in der dargestellten Normalstellung eine Ablaßöffnung 12 in der ersten Druckkammer 9 verschließt. Die Ablaßöffnung 12 führt über eine Ablaßleitung 13 zu der Sammelleitung 14 für abgelassenen Sauerstoff 3. Die Membran 11 des Differenzdrucksicherheitsventils 7 wird durch den Differenzdruck zwischen den beiden Medien 3 und 23 beaufschlagt. D. h., die erste Druckkammer 9 ist mit dem Sauerstoffraum des Membranhydrolyseurs 1 verbunden und die zweite Druckkammer 19 mit dessen Wasserstoffraum. Da die Membran verformbar ist, hebt sie beim Überschreiten eines bestimmten Differenzdrucks zwischen dem Sauerstoff 3 und dem Wasserstoff 23 von der Ablaßöffnung 12 ab, d. h. mit anderen Worten, der Ventilkörper 20 gelangt in eine Ablaßstellung. Der Differenzdruck, bei dem dies passiert, zeichnet sich dadurch aus, daß im Vergleich zum Normalzustand der relative Druck des Sauerstoffs 3 gegenüber dem Wasserstoff größer ist. Welchem Zahlenwert des Differenzdrucks dies entspricht, hängt davon ab, wie groß eine Vorspannkraft 16 ist, die die Membran 11 auf die Ablaßöffnung 12 hin beaufschlagt und wie groß die Fläche der Membran 11 ist, die in der Normalstellung des Ventilkörpers 20 der Ablaßöffnung 12 zuzuordnen ist. Durch Einstellen der Vorspannkraft 16 kann dieser Differenzdruck genau festgelegt werden. Das Einstellen der Vorspannkraft 16 kann beispielsweise durch das Einstellen der Vorspannkraft einer mechanischen Feder erfolgen, die die Membran 11 auf die Ablaßöffnung 12 hin beaufschlagt. Wenn die Membran 11 die Ablaßöffnung 12 beim Überschreiten des eingestellten Differenzdrucks zwischen den beiden Medien 3 und 23 freigegeben hat, wird der Ventilkörper 20 zusätzlich durch den jetzt auch auf den zuvor der der Ablaßöffnung 12 zugeordneten Teil der Membran 11 einwirkenden Druck des Sauerstoffs 3 in seiner Ablaßstellung gehalten, bis der eingestellte Differenzdruck um ein bestimmtes Maß unterschritten ist. Dann kehrt die Membran 11 bzw. der in ihr ausgebildete Ventilkörper 20 in seine Normalstellung zurück, in der kein Sauerstoff 3 mehr abgelassen wird. Die Membran 11 bewirkt nicht nur eine absolute Abdichtung der beiden Druckkammern 9 und 19 voneinander, ihre Verformung in Abhängigkeit von dem anliegenden Differenzdruck erfolgt bis auf innere Reibung im Material der Membran 11 auch völlig reibungsfrei und ist damit unabhängig von den Absolutdrücken der beiden Medien 3, 23.

Genau umgekehrt wie das Differenzdrucksicherheitsventil 7 ist das Differenzdrucksicherheitsventil 27 mit den Gasräumen des Membranhydrolyseurs 1 verbunden. Das heißt, in der ersten Druckkammer 29 mit der Ablaßöffnung 32 steht der Druck des Wasserstoffs 23 an, und in der zweiten Druckkammer 39 steht der Druck des Sauerstoffs 3 an. Entsprechend begrenzt das Differenzdrucksicherheitsventil 27 den relativen Überdruck des Wasserstoffs 23 gegenüber dem Sauerstoff 3. Im Falle eines übermäßigen Differenzdrucks wird Wasserstoff 23 über die Ablaßöffnung 32 und die Ablaßleitung 33 in den Sammelleitung 34 abgelassen. Die Sammelleitungen 14 für den Sauerstoff 3 und 34 für den Wasserstoff 23 sind im übrigen so getrennt, daß auch an ihren etwaigen Ausgängen ein Vermischen der beiden Medien nicht erfolgt. Beispielsweise kann der Sauerstoff 3 an die Umgebung abgelassen und der Wasserstoff 23 abgefackelt werden.

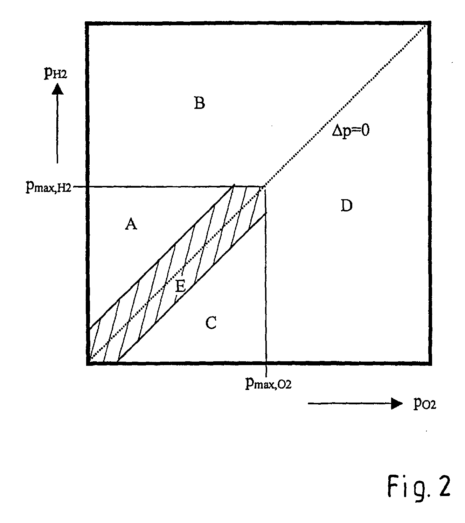

Fig. 2 ist eine Auftragung des Drucks p_{H2} des Wasserstoffs 23 über dem Druck p_{O2} des Sauerstoffs 3 bei der Vorrichtung gemäß Fig. 1. Durch die Differenzdrucksicherheitsventile 7 und 27 sowie die Überdrucksicherheitsventile 5 und 25 werden die beiden Drücke in dem schraffierten Bereich E gehalten. Dieser Bereich erstreckt sich beiderseits einer punktierten Linie die für einen Differenzdruck von Null steht. Sobald der Differenzdruck durch Erhöhen des Wasserstoffdrucks p_{H2} soweit ansteigt, daß der Bereich A erreicht wird, läßt das Differenzdrucksicherheitsventil 27 Wasserstoff 23 ab, bis der Differenzdruck in den Bereich E sicher zurückgekehrt ist. Entsprechend läßt das Differenzdrucksicherheitsventil 7 Sauerstoff 3 ab, wenn der Differenzdruck aus dem Bereich E heraus in den Bereich C kommt. Das Überdrucksicherheitsventil 5 für den Sauerstoff 3 verhindert, daß der Sauerstoffdruck den Grenzwert p_{maxO2} überschreitet. Entsprechend verhindert das Überdrucksicherheitsventil 25, daß der Wasserstoffdruck den Grenzwert p_{max,H2} überschreitet. So werden die Druckbereiche B und D gemäß Fig. 2 nie erreicht. Innerhalb des eingehaltenen Bereichs E ist eine optimale Funktion des Membranhydrolyseurs 1 gemäß Fig. 1 sichergestellt. Es besteht keine Gefahr der Beschädigung seiner Membran 2, die mit der besonderen Gefahr der Bildung von Knallgas verbunden wäre.

### BEZUGSZEICHENLISTE

- 1 -: Membranhydrolyseur
- 2 -: Membran
- 3 -: Sauerstoff
- 4 -: Sauerstoffleitung
- 5 -: Überdrucksicherheitsventil
- 6 -: Verbrauchsentnahmeventil
- 7 -: Differenzdrucksicherheitsventil
- 8 -: Verbindungsleitung
- 9 -: Druckkammer
- 10 -: Trennwand
- 11 -: Membran
- 12 -: Ablaßöffnung
- 13 -: Ablaßleitung
- 14 -: Sammelleitung
- 15 -: Wasserstand
- 16 -: Vorspannkraft
- 19 -: Druckkammer
- 20 -: Ventilkörper
- 23 -: Wasserstoff
- 24 -: Wasserstoffleitung
- 25 -: Überdrucksicherheitsventil
- 26 -: Verbrauchsentnahmeventil
- 27 -: Differenzdrucksicherheitsventil
- 28 -: Verbindungsleitung
- 29 -: Druckkammer
- 31 -: Membran
- 32 -: Ablaßöffnung
- 33 -: Ablaßleitung
- 34 -: Sammelleitung
- 35 -: Gehäuse
- 36 -: Vorspannkraft
- 39 -: Druckkammer
- 40 -: Ventilkörper
- A, B, C, D, E -: Druckbereiche

## Patentansprüche

1. Differenzdrucksicherheitsventil zur Begrenzung des Differenzdrucks zwischen zwei Medien, mit einer ersten Druckkammer für das eine der Medien und einer zweiten Druckkammer für das andere der Medien, mit einer Ablaßöffnung für das Ablassen des einen der Medien aus der ersten Druckkammer und mit einem Ventilkörper, der in einer Normalstellung die Ablaßöffnung verschließt und in einer Ablaßstellung die Ablaßöffnung freigibt, **dadurch gekennzeichnet, daß** die beiden Druckkammern (9, 19; 29, 39) durch eine verformbare Membran (11; 31) gegeneinander abgedichtet sind, deren von Differenzdruckänderungen zwischen den beiden Druckkammern (9, 19; 29, 39) hervorgerufene Verformungen den Ventilkörper (20; 40) aus seiner Normalstellung in seine Ablaßstellung bringen und umgekehrt.

2. Differenzdrucksicherheitsventil nach Anspruch 1, **dadurch gekennzeichnet, daß** der Ventilkörper (20; 40) an der Membran (11; 31) ausgebildet ist.

3. Differenzdrucksicherheitsventil nach Anspruch 1 oder 2, **dadurch gekennzeichnet, daß** der Ventilkörper (20; 40) durch eine Vorspannkraft (16; 36) in seine Normalstellung beaufschlagt wird.

4. Differenzdrucksicherheitsventil nach Anspruch 3, **dadurch gekennzeichnet, daß** die Vorspannkraft (16; 36) einstellbar ist.

5. Differenzdrucksicherheitsventil nach einem der Ansprüche 1 bis 4, **dadurch gekennzeichnet, daß** es zusammen mit einem Überdrucksicherheitsventil (5; 25) für das eine der Medien (3, 23) vorgesehen ist, das das eine der Medien (3, 23) abläßt, wenn dieses einen vorgegebenen Absolutdruck überschreitet.

6. Differenzdrucksicherheitsventil nach einem der Ansprüche 1 bis 5, **dadurch gekennzeichnet, daß** es zusammen mit einem weiteren Differenzdrucksicherheitsventil (27) nach einem der Ansprüche 1 bis 5 vorgesehen ist, wobei das weitere Differenzdrucksicherheitsventil (27) die zweite Druckkammer (39) für das eine der Medien (3, 23), die erste Druckkammer (29) für das andere der Medien (3, 23) und die Ablaßöffnung (32) für das Ablassen des anderen der Medien (3, 23) aus der ersten Druckkammer (29) aufweist.

7. Differenzdrucksicherheitsventil nach Anspruch 6, **dadurch gekennzeichnet, daß** es zusammen mit dem weiteren Differenzdrucksicherheitsventil (27) in einem gemeinsamen Gehäuse (35) angeordnet ist.

8. Differenzdrucksicherheitsventil nach Anspruch 6 oder 7, **dadurch gekennzeichnet, daß** die Ablaßöffnungen (12; 32) der beiden Differenzdrucksicherheitsventile (7; 27) zu voneinander getrennten Ablaßleitungen (13, 33) führen.

9. Differenzdrucksicherheitsventil nach einem der Ansprüche 1 bis 8, **dadurch gekennzeichnet, daß** es zur Absicherung einer zentralen Membran (2) eines Membranhydrolyseurs (1) vor Differenzdrücken zwischen den die zentrale Membran (2) beiderseits beaufschlagenden Medien (3, 23) vorgesehen ist.

10. Differenzdrucksicherheitsventil nach einem der Ansprüche 1 bis 5, **dadurch gekennzeichnet, daß** es zusammen mit mindestens zwei weiteren Differenzdrucksicherheitsventil (7, 27) nach einem der Ansprüche 1 bis 5 vorgesehen ist, wobei die beiden Druckkammern (9, 19; 29, 39) in den einzelnen Differenzdrucksicherheitsventilen (7; 27) für jeweils unterschiedliche Zuordnungen von mindestens drei Medien (3, 23) vorgesehen sind.
